# EUROPEAN PATENT SPECIFICATION

(11) **EP 2 797 793 B1**
(45) Date of publication and mention of the grant of the patent: **06.03.2019**
(21) Application number: 11878486.7
(22) Date of filing: 29.12.2011
(51) Int. Cl.: B60W 40/02, B60W 30/08, B60Q 9/00, B60R 1/00, G06K 9/00, G08G 1/16

(54) **SYSTEMS AND METHODS FOR PROXIMAL OBJECT AWARENESS**
SYSTEME UND VERFAHREN FÜR PROXIMALES OBJEKTBEWUSSTSEIN
SYSTÈME ET PROCÉDÉ DE CONSCIENTISATION À DES OBJETS PROCHES

(43) Date of publication of application: 05.11.2014
(73) Proprietor: Intel Corporation, Santa Clara, CA 95054 (US)
(72) Inventor: GRAUMANN, David, L., Portland, OR 97229 (US); MONTESINOS, Carlos, San Jose, CA 95112 (US)
(74) Representative: Goddar, Heinz J.
(86) International application number: PCT/US2011/067860
(87) International publication number: WO 2013/101075

(56) References cited:
- EP-A1- 1 916 846
- EP-A1- 2 555 519
- WO-A1-2010/099416
- JP-A- H0 948 282
- JP-A- 2007 142 545
- KR-B1- 100 196 383
- US-A1- 2005 276 450
- US-A1- 2010 259 371
- US-A1- 2013 093 583

## Description

### TECHNICAL FIELD

This invention generally relates to systems and methods for awareness of proximal objects.

### BACKGROUND

Drivers of vehicles, such as cars, may experience limited visibility when driving in reverse. The limited visibility may lead to accidents, such as those that lead to injury, death, or property damage. As a result, vehicles may be outfitted with rear image sensors that provide an image of what is behind the vehicle when the vehicle is driven in reverse. In some cases, the images from the rear of the vehicle may be provided only when the vehicle is put in reverse gear. The images viewed from the rear of the vehicle may be displayed on a display device within the cockpit of the vehicle, such as on a display panel provided on a center console of a car.

Typically, a fish eye lens camera provided on the rear exterior of the vehicle may be used for the purposes of generating an image as viewed from the rear of the vehicle. Such systems may generate images of poor quality, such as images that arc distorted. Drivers of vehicles may find it difficult, in many cases, to interpret such images. Therefore, it may be difficult for a driver to determine, either in a qualitative fashion or in a quantitative fashion, the distance between the vehicle and the nearest obstruction on the rear side of the vehicle. Further, it may be difficult for the driver to determine the angle of an obstruction relative to the rear of the vehicle.

Range sensors may be provided on the rear of a vehicle to provide information about the range of an object at the rear of a vehicle. However, range sensors to not provide a visual image as viewed from the rear of the vehicle and, therefore, it may be difficult for a driver to visualize and comprehend the relative distance between the vehicle and an obstruction.

Despite having visual and other sensory aids provided on a vehicle for use while driving in reverse, a driver of a vehicle may benefit from a comprehensive solution that provides user-friendly and easy to interpret information on the range of obstructions, the direction of obstructions, and an image of the rear of the vehicle.

US 2005/0276450 A1 discloses a vehicle surroundings monitoring apparatus and method comprising: receiving by at least one processor associated with a vehicle, an image sensor signal and a range sensor signal; determining, by the at least one processor, a first range to an object based on the range sensor signal; generating by the at least one processor, an enhanced image signal corresponding to an enhanced image based in part on the range to the object and the image sensor signal, wherein the enhanced image provides an image of the object, wherein the object is visually enhanced, the enhanced image signal to a display device associated with the vehicle.

### BRIEF DESCRIPTION OF THE FIGURES

Reference will now be made to the accompanying drawings, which are not necessarily drawn to scale, and wherein:
FIG. 1A is a simplified top-down view schematic diagram illustrating an example vehicle providing sensory information pertaining to obstructions at a rear side of the vehicle in accordance with embodiments of the invention.
FIG. 1B is a simplified side view schematic diagram illustrating the example vehicle of FIG. 1A operating in accordance with embodiments of the invention.
FIG. 2 is a simplified block diagram illustrating an example system for receiving sensor input and providing sensory information regarding proximal objects at the rear of the vehicle of FIG. 1A in accordance with embodiments of the invention.
FIG. 3 is a flow diagram illustrating an example method of providing an enhanced image and audio rendering of obstructions at the rear of the vehicle of FIG. 1A in accordance with embodiments of the invention.
FIG. 4A is a simplified schematic diagram illustrating an example enhanced image of obstructions detected at the rear of the vehicle of FIG. 1A generated in accordance with embodiments of the invention.
FIG. 4B is a simplified schematic diagram illustrating an example enhanced image of obstructions detected at the rear of the vehicle of FIG. 1A generated in accordance with embodiments of the invention.
FIG. 4C is a simplified schematic diagram illustrating an example enhanced image of obstructions detected at the rear of the vehicle of FIG. 1A generated in accordance with embodiments of the invention.
FIG. 4D is a simplified schematic diagram illustrating an example enhanced image of obstructions detected at the rear of the vehicle of FIG. 1A generated in accordance with embodiments of the invention.
FIG. 5 is a simplified diagram illustrating an example audio rendering for representing obstructions detected at the rear of the vehicle of FIG. 1A generated in accordance with embodiments of the invention.

### DETAILED DESCRIPTION OF EMBODIMENTS OF THE INVENTION

Embodiments of the invention are described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Embodiments of the invention may provide apparatus, systems, methods, and apparatus for providing awareness of proximal objects, particularly to a driver of a vehicle. In one aspect, the vehicle may be traveling in reverse, and the driver of the vehicle may be made aware of obstructions at the rear of the vehicle. Oftentimes, a driver may have limited visibility when operating a vehicle in reverse. Therefore, making the driver aware of objects at the rear of the vehicle may enhance safety. Various sensory-based information, such as, for example, enhanced imagery and enhanced audio, may be provided to make the driver aware of obstructions at the rear of the vehicle. The enhanced images may, in one aspect, provide user-friendly and easy to interpret information about objects that may be in proximity of the rear of the vehicle when the vehicle is driven in reverse. Therefore, the enhanced images may result in improved safety while operating the vehicle, particularly while driving the vehicle in reverse. The enhanced images as displayed to a driver may provide a wide view from the rear of the vehicle and may provide images of certain objects enhanced relative to other objects based on certain parameters, such as the relative distance to each of the objects.

Example embodiments of the invention will now be described with reference to the accompanying figures.

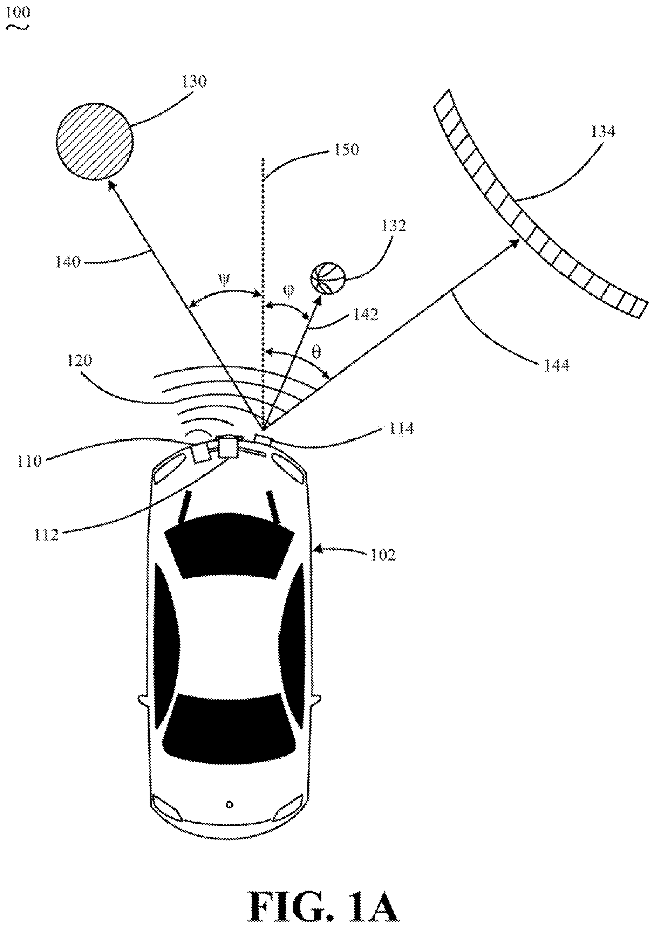

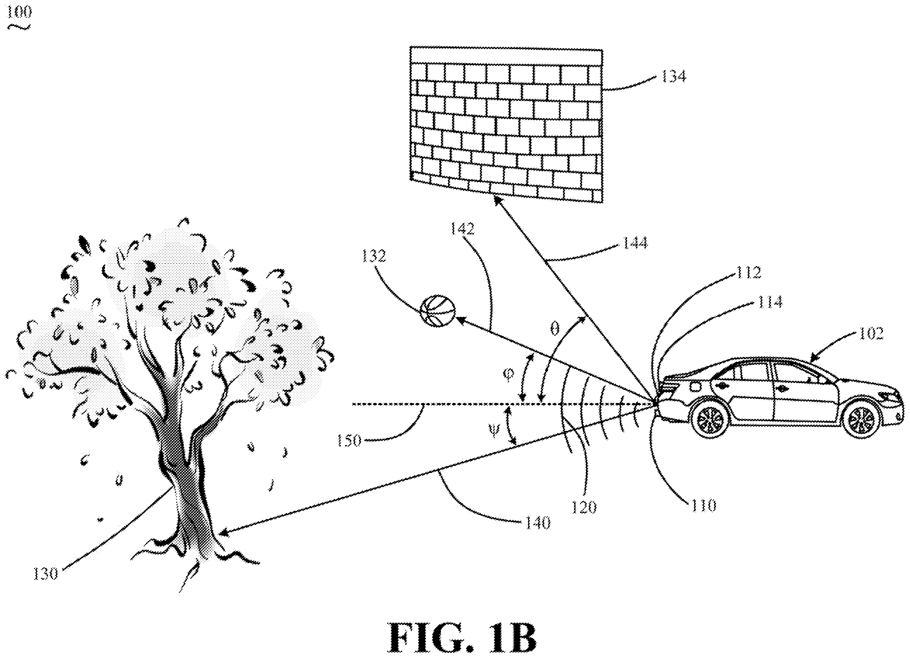

Referring now to FIGS. 1A and 1B, an example scenario 100 may include a vehicle 102 with an emitter 110, an image sensor 112, and a range sensor 114. The emitter may be configured to emit waves 120, for example, electromagnetic radiation, such as visible light, or compression waves, such as ultrasonic sound. The image sensor 112 and the range sensor 114 may detect a variety of objects at the rear of the vehicle, such as a tree 130, a basketball 132, and a wall 134, and may provide a variety of ranges and angles relative to the vehicle 102. Vectors 140, 142, and 144 may be defined from the range sensor 114 to their corresponding objects 130, 132, and 134, respectively. The vectors 140, 142, and 144 may characterize both a distance to the respective object, as well as a respective angle from a reference plane 150. The reference plane 150 is depicted as projecting in a normal direction from the rear of the vehicle 102, but in other embodiments may be at any angle relative to the vehicle 102. The angles between the vectors 140, 142, and 144 and the reference plane 150 may be defined as ψ, ϕ, and θ, respectively.

For the purposes of this discussion, a vehicle 102 can include, but is not limited to, a car, a truck, a light-duty truck, a heavy-duty truck, a pickup truck, a minivan, a crossover vehicle, a van, a commercial vehicle, a private vehicle, a sports utility vehicle, a tractor-trailer, an aircraft, an airplane, a jet, a helicopter, a space vehicle, a watercraft, or any other suitable vehicle having a relatively closed cockpit. However, it will be appreciated that embodiments of the disclosure may also be utilized in other environments in which a relatively closed area is provided.

The image sensor 112 may be any known device that converts an optical image to an electronic signal. The image sensor 112 may be of any known variety including a charge-coupled device (CCD), complementary metal oxide semiconductor (CMOS) sensors, or the like. The image sensor 112 may be of any pixel count and aspect ratio.

The range sensor 114 may be of any known variety including, for example, an infrared detector. The emitter 110 may be a radiation emitter and may emit infrared radiation 120 that may reflect off of an object. The reflected radiation may be detected by the range sensor 114 to determine a range or distance between the range sensor 114 and the object. For example, the emitter 110 may emit infrared radiation that may reflect off of objects 130, 132, and 134 located at the rear of the vehicle. The reflected radiation may then be detected by the range sensor 114 to determine the distance between the range sensor 114 and the one or more objects at the rear of the vehicle 102.

In certain embodiments, the range sensor 114 may be a light detection and ranging (LIDAR) detector. In such an implementation, the emitter 110 may be an electromagnetic radiation emitter that emits coherent radiation, such as a light amplification by a stimulated emission of radiation (laser) beam at one or more wavelengths across a relatively wide range, including near-infrared, visible, or near-ultraviolet (UV). In one aspect, the laser beam may be generated by providing the emitter 110 with electrical signals. The LIDAR detector may detect a scattered laser beam reflecting off of an obstruction object 130, 132, and 134 and determine a range to the objects 130, 132, and 134. In one aspect, the LIDAR detector may apply Mei solutions to interpret scattered laser light to determine range based thereon. In other aspects, the LIDAR detector may apply Rayleigh scattering solutions to interpret scattered laser light to determine range based thereon.

In certain other embodiments, the range sensor 114 may be a radio detection and ranging (RADAR) detector. In such an implementation, the emitter 110 may be an electromagnetic radiation emitter that emits microwave radiation. In one aspect, the emitter 110 may be actuated with electrical signals to generate the microwave radiation 120. The microwave radiation 120 may be of a variety of amplitudes and frequencies. In certain embodiments, the microwave radiation 120 may be mono-tonal or have substantially a single frequency component. The RADAR detector may detect scattered microwaves reflecting off of an obstruction object 130, 132, and 134 and determine a range to the object 130, 132, and 134. In one aspect, the range may be related to the power of the reflected microwave radiation. RADAR may further use Doppler analysis to determine the change in range between the range sensor 114 and an obstruction object 130, 132, and 134. Therefore, in certain embodiments, the range sensor 114 may provide both range information, as well as information about the change in range to an object 130, 132, and 134.

In yet other embodiments, the range sensor 114 may be a sound navigation and ranging (SONAR) detector. In such an implementation, the emitter 110 may be an acoustic emitter that emits compression waves 120 at any frequency, such as frequencies in the ultra-sonic range. In one aspect, the emitter 110 may be actuated with electrical signals to generate the sound 120. The sound 120 may be of a variety of tones, magnitude, and rhythm. Rhythm, as used herein, is a succession of sounds and silences. In one aspect, the sound 120 may be a white noise spanning a relatively wide range of frequencies with a relatively consistent magnitude across the range of frequencies. Alternatively, the sound 120 may be pink noise spanning a relatively wide range of frequencies with a variation in magnitude across the range of frequencies. In yet other alternatives, the sound 120 may be mono-tonal or may have a finite number of tones corresponding to a finite number of frequencies of sound compression waves. In certain embodiments, the emitter 110 may emit a pulse of sound 120, also referred to as a ping. The SONAR detector may detect the ping as it reflects off of an obstruction object 130, 132, and 134 and determine a range to the object 130, 132, and 134 by measuring the time it takes for the sound to arrive at the range sensor 114. In one aspect, the range may be related to the total time it takes for a ping to traverse the distance from the emitter 110 to the obstruction objects 130, 132, and 134 and then to the range sensor 114. The determined range may be further related to the speed of sound. SONAR may further use Doppler analysis to determine the change in range between the range sensor 114 and an obstruction object 130, 132, and 134. Therefore, in certain embodiments, the range sensor 114 may provide both range information, as well as information about the change in range to an object 130, 132, and 134.

It should be noted that three objects 130, 132, and 134 are depicted in FIGS. 1A and 1B for illustrative purposes only. It should be appreciated that the systems, methods, and apparatus disclosed herein can be applied to any number of obstructions behind the vehicle 102 at any distance and at any angle.

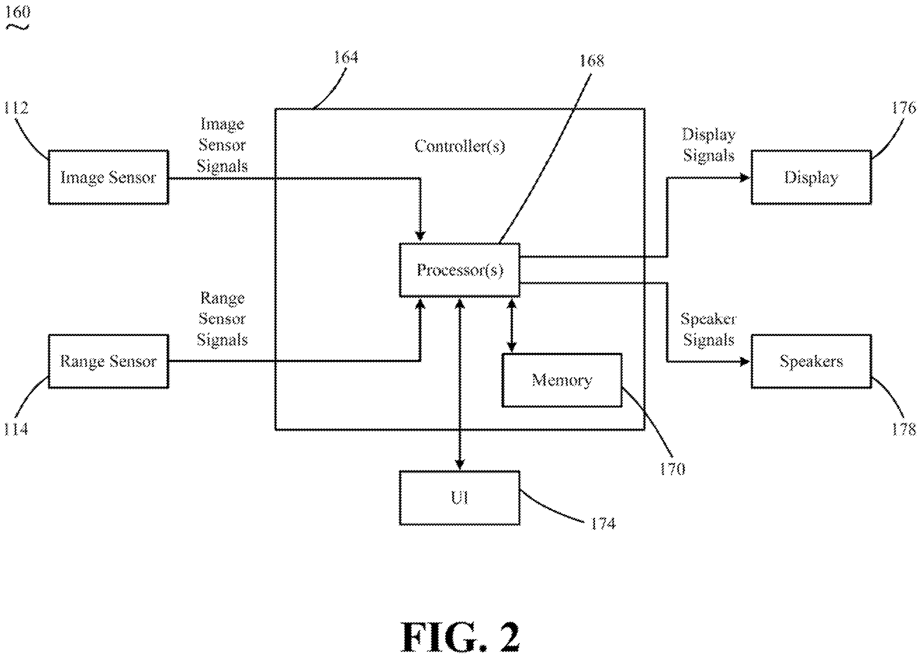

Referring now to FIG. 2, an example system 160 for providing enhanced images and enhanced sounds indicative of obstructive objects 130, 132, and 134 in accordance with embodiments of the disclosure is illustrated. The system 160 may include one or more controllers 164, each controller 164 having one or more processors 168 communicatively coupled to memory 170. The one or more processors 168 may further be communicatively coupled to the image sensor 112, the range sensor 114, a user interface 174, a display 176, and one or more speakers 178. Image sensor signals generated by the image sensor 112 and range sensor signals generated by the range sensor 114 may be provided to the one or more processors 168. The one or more processors 168 may further receive input from or provide output to the user interface 174.

The processor(s) 168 may include, without limitation, a central processing unit (CPU), a digital signal processor (DSP), a reduced instruction set computer (RISC), a complex instruction set computer (CISC), a microprocessor, a microcontroller, a field programmable gate array (FPGA), or any combination thereof. The system 160 may also include a chipset (not shown) for controlling communications between the processor(s) 168 and one or more of the other components of the system 160. In certain embodiments, the system 160 may be based on an Intel® Architecture system, and the proccssor(s) 168 and chipset may be from a family of Intel® processors and chipsets, such as the Intel® Atom® processor family. The processor(s) 168 may also include one or more processors as part of one or more application-specific integrated circuits (ASICs) or application-specific standard products (ASSPs) for handling specific data processing functions or tasks.

The memory 170 may include one or more volatile and/or non-volatile memory devices including, but not limited to, random access memory (RAM), dynamic RAM (DRAM), static RAM (SRAM), synchronous dynamic RAM (SDRAM), double data rate (DDR) SDRAM (DDR-SDRAM), RAM-BUS DRAM (RDRAM), flash memory devices, electrically erasable programmable read only memory (EEPROM), non-volatile RAM (NVRAM), universal serial bus (USB) removable memory, or combinations thereof.

In certain embodiments, the one or more processors 168 may be part of an in-vehicule infotainment (IVI) system. In other embodiments the one or more processors 168 may be dedicated to the system 160 for providing enhanced images and enhanced sounds indicative of obstructive objects 130, 132 and 134. Therefore, in such embodiments, the system 160 is separate from the IVI system. However, the system 160 may optionally communicate with the IVI system of the vehicle 102.

The user interface 174 may be any known input device, output device, or input and output device that can be used by a user to communicate with the one or more processors 168. The user interface 174 may include, but is not limited to, a touch panel, a keyboard, a display, speakers, a switch, a visual indicator, an audio indicator, a tactile indicator, a speech-to-text engine, or combinations thereof. In one aspect, the user interface 174 may be used by a user, such as the driver of the vehicle 102, to selectively activate or deactivate the system 160. In another aspect, the user interface 174 may be used by the user to provide parameter settings for the system 160. Non-limiting examples of the parameter settings may include power settings of the system 160, the sensitivity of the range sensor 114, the optical zoom associated with the image sensor 112, the frame rate of the image sensor 112, the brightness of the display 176, the volume of the one or more speakers 178, other parameters associated with enhancements of images displayed on a display 176, and other parameters associated with enhancements of sounds played by the one or more speakers 178. The user interface 174 may further communicate with the one or more processors 168 and provide information to the user, such as an indication that the system 160 is operational.

The display 176 may be any known type of display including, but not limited to, a touch screen, a liquid crystal display (LCD), a thin-film transistor (TFT) display, and an organic light-emitting diode (OLED) display, a plasma display, a cathode ray tube (CRT) display, or combinations thereof. In one aspect, the display 176 may receive display signals and, based upon the display signals, provide still or moving images corresponding to the display signals. In another aspect, the images displayed on the display 176 may be viewed by one or more users, such as a driver of the vehicle 102.

The one or more speakers 178 may be of any known type including, but not limited to, a cone diaphragm-type speaker, a dynamic speaker, a piezoelectric speaker, a full-range speaker, a subwoofer, a woofer, a tweeter, or combinations thereof. In one aspect, the one or more speakers 178 may receive speaker signals and, based upon the speaker signals, provide sound corresponding to the speaker signals. In another aspect, the sounds generated by the one or more speakers 178 may be heard by one or more users, such as the driver of the vehicle 102.

During operation, the one or more processors 168 may generate display signals that are provided to the display 176 based at least in part on the received image sensor signals, the range sensor signals, and optionally input from the user interface 174. In one aspect, the display signals may correspond to a display image that may be shown on the display 176. In certain embodiments, the display image may be an enhanced display image of the image corresponding to the image sensor signals provided by the image sensor 112. The enhancement associated with the enhanced display image may entail rendering one of the objects 130, 132, and 134 differently from the other objects 130, 132, and 134. For example, the rendering of one of the objects 130, 132, and 134 entails an oscillation and may entail a different color, a different frequency of oscillation, a different magnitude of oscillation, a surrounding halo, a different size of a surrounding halo, a different color of a surrounding halo, a disproportionate size, a different level of pixel dithering, or combinations thereof relative to the other objects 130, 132, and 134. Therefore, in the enhanced display image, one or more of the objects 130, 132, and 134 may be displayed more prominently than the other objects 130, 132, and 134. In other words, the user viewing the enhanced display image may notice one or more of the objects 130, 132, and 134 more readily than some of the other objects 130, 132, and 134.

In certain embodiments, the most proximal of the objects 130, 132, and 134 may be displayed more prominently than the other objects 130, 132, and 134 in the enhanced display image as displayed on a display 176. For example, the basketball 132 may be more proximal to the vehicle 102 than the tree 130 or a wall 134. Accordingly, the basketball 132 may be displayed more prominently in the enhanced display image as displayed on the display 176. When viewed by a user, such as the driver of the vehicle 102, the user may notice the basketball 132 more readily than the tree 130 and the wall 134. In one aspect, based upon the enhanced display image, the user may be aware that the basketball 132 is closer to the vehicle 102 than the other two objects 130 and 134.

In certain other embodiments, the level of prominence accorded to each of the objects 130, 132, and 134 may be related to the relative distance between the objects 130, 132, and 134 and the rear of the vehicle 102. Therefore, the basketball 132 may be displayed more prominently than the wall 134, which, in turn, may be displayed more prominently than the tree 130, since the basketball 132 is more proximal than the wall 134, and the wall 134 is more proximal to the vehicle than the tree 130. As the vehicle 102 moves and the relative distances between the vehicle 102 and the objects 130, 132, and 134 changes, so might the enhancement applied to each object. For example, if the vehicle 102 moves from a position where the basketball 132 is the most proximal object to a position where the tree 130 is the most proximal object, then the image may change in a manner where the relatively high prominence shifts from the image of the basketball 132 to the image of the tree 130.

In yet other embodiments, the level of prominence accorded to each of the objects 130, 132, and 134 and the enhanced display image may be related to the relative angle between the objects 130, 132, and 134 and the reference plane 150. For example, objects, such as the basketball 132 with a smaller angle ϕ to the reference plane 150 may be displayed more prominently than objects 130 and 134 that have relatively greater angles ψ and θ, respectively, to the reference plane 150.

Continuing on with the operation of the system 160, the one or more processors 168 may provide speaker signals to the one or more speakers 178. In one aspect, the speaker signals may correspond with audio output from the one or more speakers 178. The audio output may be an enhanced audio output that is generated based in part upon the image sensor signal, the range sensor signal, and optionally any input from the user interface 174. In one aspect, the enhanced audio output may be indicative of the location of the one or more objects 130, 132, and 134. In another aspect, a user, such as the driver of the vehicle 102, may hear the enhanced audio output and gain awareness of the objects 130, 132, and 134 at the rear of the vehicle 102. Therefore, each of the audio signals sent to corresponding speakers 178 may be rendered in a manner that can be combined with audio output from all of the actuated speakers 178 to produce the desired directionality, magnitude, frequency, rhythm, and repetition to provide object proximity awareness to the user, such as the driver of the vehicle 102.

As a non-limiting example, consider that the one or more speakers 178 consist of two speakers 178, and the most proximal object 132 should be rendered from a direction that is equidistant between the two speakers 178. In such a case, the one or more processors may generate audio signals corresponding to each of the two speakers 178 so that an equal magnitude of sound is produced by the two speakers 178 such that it appears to someone listening to the sounds from a particular location, that the sound originates from some point between the two speakers 178.

In certain embodiments, the enhanced audio output may provide sound from a plurality of speakers in a manner such that the audio output is perceived as originating from the direction of the most proximal object 130, 132, and 134 by a user, such as the driver of the vehicle 102. For example, the audio signals provided to the one or more speakers 178 may be such that the driver of the vehicle 102 may perceive a relatively substantial magnitude of sound originating from the direction of the basketball 132, and relatively less magnitude of sound or no sound from the direction of the tree 130 and the wall 134.

In certain other embodiments, the level of audio output from each of one or more speakers 178 may be rendered spatially in a manner such that the level of sound perceived by a user corresponds to the proximity of the various proximal objects 130, 132, and 134. In other words, a driver of the vehicle 102 may perceive a greater magnitude of sound from the direction of the basketball 132 and a relatively lower magnitude of sound from the direction of the wall 134 and yet a relatively lower magnitude of sound from the direction of the tree 130.

In yet other embodiments, the level of audio output from each of the one or more speakers 178 may be rendered spatially in a manner such that the level of sound perceived by a user corresponds to the angle of the objects 130, 132, and 134 relative to the reference plane 150. For example, sound may be perceived more prominently from the direction of objects, such as the basketball 132, with a smaller angle ϕ to the reference plane 150 than from the direction of objects 130 and 134 that have relatively greater angles ψ and θ, respectively, to the reference plane 150.

It should be noted that in some embodiments, the one or more processors 168 may also optionally receive information pertaining to the transmission (not shown) of the vehicle 102. For example, the one or more processors 168 may receive information that indicates if the vehicle 102 is in a reverse gear. The vehicle 102 may be driven in a reverse direction when the vehicle 102 is in a reverse gear. In one aspect, the system 160 may generate enhanced display images and enhanced audio output only when the vehicle 102 is in a reverse gear.

It should also be noted that in certain embodiments, only the enhanced image may be generated and displayed on the display 176. In yet other embodiments, both the enhanced image is displayed on the display 176, as well as the enhanced audio played on the one or more speakers 178. In one aspect, the user of the system 160 may determine if an enhanced audio is also desired.

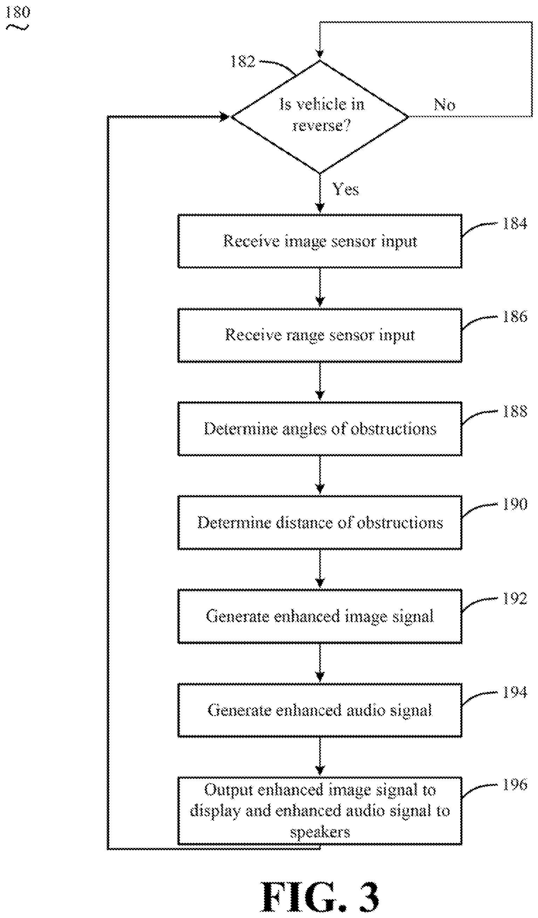

Referring now to FIG. 3, an example method 180 for providing an enhanced image and an enhanced audio output in accordance with embodiments of the disclosure is illustrated. The method 180 may use the elements and the system 160 as described with reference to FIGS. 1A, 1B, and 2.

At block 182, it is determined if the vehicle is in reverse. The determination may be performed by the one or more processors 168 based upon a communicative signal received by the one or more processors 168. The communicative signal may, in one aspect, be provided by one or more of an engine controller, a transmission controller, a vehicle main computer, an IVI system, or combinations thereof. If it is determined that the vehicle 102 is not in reverse then the method 180 continues to monitor if the vehicle 102 transmission is placed in reverse.

If at block 182 it is determined that the vehicle 102 is in reverse, then input from the image sensor 112 may be received at block 184. As described with reference to FIG. 2, the image sensor signal generated by the image sensor 112 may be received via a communicative link by the one or more processors 168 of the system 160.

At block 186, input from the range sensor 1 14 may be received. Again, the range sensor signal generated by the range sensor 114 may be received via a communicative link by the one or more processors 168 of the system 160. Therefore at blocks 184 and 186, the image sensor signals and the range sensor signals may be received concurrently by the one or more processors 168.

At block 188, the angles ψ, ϕ, and θ of each of the obstruction objects 130, 132, and 134 may be determined. The determination of the angles ψ, ϕ, and θ may be conducted by the one or more processors 168. In one aspect, the combination of the image sensor information with the range sensor information is sufficient to determine the angles ψ, ϕ, and θ to each of the obstruction objects 130, 132, and 134. In one alternative, only one of the image sensor information and the range sensor information may be needed to determine the angles ψ, ϕ, and θ to each of the obstruction objects 130, 132, and 134.

In certain embodiments, determining the angles ψ, ϕ, and θ may entail analyzing the image that is generated by the image sensor 112 to identify each of the objects 130, 132, and 134. Upon identifying the relative positions of each of the objects 130, 132, and 134, information on the distance of each of the objects 130, 132, and 134 from the range sensor 114 may be used to determine the angles ψ, ϕ, and θ of each of the objects 130, 132, and 134. In one aspect, trigonometric mathematical manipulations may be applied to the relative positions determined using the image sensor 112 and the distance using the range sensor 114 to arrive at the angles ψ, ϕ, and θ of each of the objects 130, 132, and 134. Such mathematical manipulations may incorporate aspects of triangulation to determine angles from the images and distances as provided by the sensors 112 and 114.

It should be noted that in certain embodiments, the determination of the angles ψ, ϕ, θ, at block 188, may be optional and may not be needed for generating an enhanced display image or an enhanced audio output.

Next, at block 190, the distance to each of the obstruction objects 130, 132, and 134 may be determined. In certain embodiments, the distance information may be provided by the range sensor 114 to the one or more processors 168. In other embodiments, the received range sensor signal may be analyzed in conjunction with the received image sensor signal to determine the distance to each of the objects 130, 132, and 134.

As a non-limiting example, consider the scenario 100 of FIGS. 1A and 1B, where the range sensor 114 is a SONAR detector. The range sensor 114 may receive three separate return signals corresponding to each ping that is transmitted by the acoustic emitter 110 or transducer. From the three separate return signals, the one or more processors 168 may be able to determine three different ranges. However, based only on the range sensor 114 information, the one or more processors 168 may not be able to determine which object 130, 132, and 134 corresponds to each of the determined ranges from the range sensor data. With the image sensor signals, the one or more processors 168 may be able to identify the three objects 130, 132, and 134 and then be able to estimate which of the objects 130, 132, and 134 are likely to be the nearest. Based upon these estimations, the range sensor 114 may determine the ranges to each of the identified proximal objects 130, 132, and 134.

Blocks 188 and 190, in combination, may provide information, such as the relative angle and the relative distance, of each of the obstruction objects 130, 132, and 134. Therefore, using such information, the vectors 140, 142, and 144, corresponding to each of the objects 130, 132, and 134, respectively, may be known.

At block 192, the enhanced image signal may be generated. As discussed in conjunction with FIG. 2, the enhanced image signal may be generated by the one or more processors 168 based upon one or more of the image sensor signal, the range sensor signal, and inputs from the user interface 174. In one aspect, the angle and range information corresponding to each of the objects 130, 132, and 134, as determined at blocks 188 and 190, may be used to enhance one or more of the objects 130, 132, and 134 relative to the other objects 130, 132, and 134. For example, the nearest object, in this case the basketball 132, may be made more prominent in the enhanced image relative to the more distal objects, in this case the tree 130 and the wall 134.

At block 194, an enhanced audio signal may be generated. As described in conjunction with FIG. 2, the enhanced audio signal may be generated by the one or more processors 168 based upon one or more of the image sensor signal, the range sensor signal, and inputs from the user interface 174. In one aspect, the angle and range information corresponding to each of the objects 130, 132, and 134, as determined at blocks 188 and 190, may be used to provide the enhanced audio output corresponding to the relative angle or the relative distance of one or more of the objects 130, 132, and 134 relative to the other objects 130, 132, and 134. For example, the enhanced audio signal may be output from one or more speakers 178 in a manner such that it appears to someone sitting in the driver's seat of the vehicle 102 that the sound is originating from the direction of the nearest object, in this case the basketball 132. Audio output from the direction of the more distal objects, in this case the tree 130 and the wall 134, may be fainter than the sound coming from the direction of the basketball 132.

It should be noted that in certain embodiments, the determination of the enhanced audio output and signal, at block 194, may be optional and that the method 180 may be performed without providing an audio output.

At block 196, the enhanced audio output signal may be output to the one or more speakers 178, and the enhanced image signal may be output to the display 176. The user, such as the driver of the vehicle 102, may view the enhanced image on the display 176 and hear the enhanced audio on the one or more speakers 178. Therefore, by viewing the enhanced display, or hearing the enhanced audio, or both, the user may be better informed about obstructions at the rear of the vehicle 102.

It should be noted that the method 180 may be modified in various ways in accordance with certain embodiments of the disclosure. For example, one or more operations of the method 180 may be eliminated or executed out of order in other embodiments of the disclosure. For example, in certain embodiments, it may not be necessary to place the vehicle 102 in reverse as shown in block 182 for the remainder of the the method 180 to be executed. Additionally, other operations may be added to method 180 in accordance with other embodiments of the disclosure.

As discussed with reference to FIG. 2, the enhanced image of one object 130, 132, and 134 relative to the other objects 130, 132, and 134 is displayed on the display 176. In one aspect, the more proximal objects may be displayed more prominently than the more distal objects.

For example, the image of the most proximal object, such as the basketball 132, may be displayed on the display 176 with a different color than the other objects 130 and 134. The basketball 132 may be displayed in a red color or with a red halo. The next most proximal object, such as the wall 134, may be displayed in yellow, and the most distal object, such as the tree 130, may be displayed in green. Therefore, the various colors used for each of the objects 130, 132, and 134 as displayed on the display 176 may draw greater relative attention to the most proximal object, such as the basketball 132, versus the most distal object, such as the tree 130.

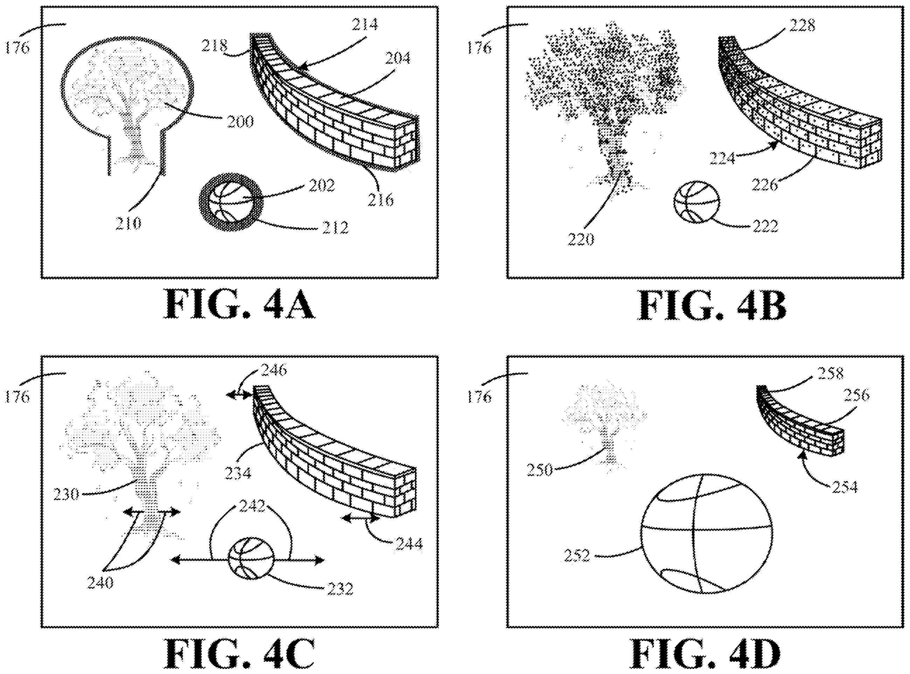

Referring now to FIG. 4A, an example enhanced display image as displayed on display 176 is described. An image of the tree 200 corresponding to the tree 130 of FIGS. 1A and 1B, an image of the basketball 202 corresponding to the basketball 132 of FIGS. 1A and 1B, and an image of the wall 204 corresponding to the wall 134 of FIGS. 1A and 1B may be shown on the enhanced image. The enhanced image may further contain a halo 210 surrounding and corresponding to the image of the tree 200, a halo 212 surrounding and corresponding to the image of the basketball 202, and a halo 214 surrounding and corresponding to the image of the wall 204. In one aspect, the halo 212 surrounding the basketball may be more prominent than the halo 214 surrounding the wall, and the halo 214 surrounding the wall may, in turn, be more prominent than the halo 210 surrounding the tree to indicate that the basketball 132 is more proximal than the wall 134, which is more proximal than the tree 130 to the vehicle 102. Therefore, the one or more processors 168 may receive image sensor signals from the image sensor 112 and range sensor signals from the range sensor 114 and modify the received image based on determined angle and range information from blocks 188 and 190 to generate differentiated surrounding halos 210, 212, and 214 for each of the images of the objects 200, 202, and 204, respectively. In certain embodiments, prominence may be conveyed by a larger halo surrounding the image of more proximal objects, such as the image of the basketball 202 relative to the image of other objects 200 and 204. In other embodiments, prominence may be conveyed by a thicker halo surrounding the image of more proximal objects, such as the image of the basketball 202 relative to the image of other objects 200 and 204. In yet other embodiments, the prominence may be conveyed by a different colored halo surrounding the image of more proximal objects, such as the image of the basketball 202 relative to the image of other objects 200 and 204.

It should be noted that certain objects, such as the wall 134, may span a length, where certain portions of the wall 134 are relatively more proximal to the rear of the vehicle 102 than other portions of the wall 134. Therefore, in certain embodiments, the rendered halo corresponding to a proximal portion of the wall 216 may be more prominent than the halo corresponding to a more distal portion of the wall 218.

Referring now to FIG. 4B, another example enhanced display image as displayed on display 176 is described. An image of the tree 220 corresponding to the tree 130, an image of the basketball 222 corresponding to the basketball 132, and an image of the wall 224 corresponding to the wall 134 may be shown on the enhanced image. The various images of objects 220, 222, and 224 may be shaded further. In one aspect, the image of the basketball 222 may be less shaded than the image of the wall 224, and the image of the wall 224 may, in turn, be less shaded than the image of the tree 220 to indicate that the basketball 132 is more proximal than the wall 134, which is more proximal than the tree 130 to the vehicle 102. In another aspect, the one or more processors 168 may receive image sensor signals from the image sensor 112 and range sensor signals from the range sensor 114 and modify the received image based on determined angle and range information from blocks 188 and 190 to generate differentiated shading for each of the images of the objects 220, 222, and 224, respectively. Therefore, in certain embodiments, prominence of the image of one object relative to the image of another object may be conveyed by less shading, or greater brightness, such as less shading of the image of the basketball 222 relative to the image of other objects 220 and 224. In other embodiments, prominence may be conveyed by more shading, or less brightness, of the image of more proximal objects, such as the image of the basketball 222 relative to the image of other objects 220 and 224. In yet other embodiments, the prominence may be conveyed by a differently colored shading of the image of more proximal objects, such as the image of the basketball 222 relative to the image of other objects 220 and 224.

Certain objects, such as the wall 134, may span a length, where certain portions of the wall 134 arc relatively more proximal to the rear of the vehicle 102 than other portions of the wall 134. Therefore, in certain embodiments, the shading of the image 224 corresponding to a proximal portion of the wall 226 may be less than the shading of the image 224 corresponding to a more distal portion of the wall 228.

Referring now to FIG. 4C , according to the invention, an enhanced display image as displayed on display 176 is described. An image of the tree 230 corresponding to the tree 130, an image of the basketball 232 corresponding to the basketball 132, and an image of the wall 234 corresponding to the wall 134 may be shown on the enhanced image. The various images of objects 230, 232, and 234 may further oscillate at various oscillation magnitudes. In one aspect, the image of the basketball 232 may oscillatc, as indicated by the relatively large arrows 242, more than the image of the wall 234, as indicated by relatively smaller arrows 244 and 246. The image of the wall 234 may, in turn, be oscillated more than the image of the tree 230. as indicated by arrows 240. The relative oscillations, as described, may indicate that the basketball 132 is more proximal than the wall 134, which is more proximal than the tree 130 to the vehicle 102. In another aspect, the one or more processors 168 may receive image sensor signals from the image sensor 112 and range sensor signals from the range sensor 114 and generate the enhanced image such that one or more of the images of the objects oscillate differently from the images of the other objects based on determined angle and range information from blocks 188 and 190. Therefore, in certain embodiments, prominence of the image of one object relative to the image of another object may be conveyed by the greater magnitude of oscillation of the image of the object corresponding to the more proximal object, such as greater oscillation of the image of the basketball 232 relative to the image of other objects 230 and 234. In other embodiments, prominence may be conveyed by less magnitude of oscillation of the image of more proximal objects, such as the image of the basketball 232 relative to the image of other objects 230 and 234. In yet other embodiments, the prominence may be conveyed by a different frequency of oscillation of the image of more proximal objects, such as the image of the basketball 232 relative to the image of other objects 230 and 234.

As discussed earlier, certain objects, such as the wall 134, may span a length, where certain portions of the wall 134 are relatively more proximal to the rear of the vehicle 102 than other portions of the wall 134. Therefore, in certain embodiments, the oscillation of the image 234 corresponding to a proximal portion of the wall 244 may be greater than the oscillation of the image 234 corresponding to a more distal portion of the wall 246.

Referring now to FIG. 4D, a yet further example of an enhanced display image as displayed on display 176 is described. An image of the tree 250 corresponding to the tree 130, an image of the basketball 252 corresponding to the basketball 132, and an image of the wall 254 corresponding to the wall 134 may be shown on the enhanced image. The various images of objects 250, 252, and 254 may be sized relative to each other corresponding to their relative proximity to the vehicle 102. In one aspcct, the image of the basketball 252 may be rendered as disproportionately large relative to the wall 254, and the image of the wall 254 may, in turn be shown as disproportionately larger than the image of the tree 250. The relatively disproportionate sizes of the images 250, 252, and 254 may indicate that the basketball 132 is more proximal than the wall 134, which is more proximal than the tree 130 to the vehicle 102. Therefore, the one or more processors 168 may receive image sensor signals from the image sensor 112 and range sensor signals from the range sensor 114 and modify the received image based on determined angle and range information from blocks 188 and 190 to generate a differentiated size for each of the images of the objects 250, 252, and 254, respectively. In certain embodiments, prominence of the image of one object relative to the image of another object may be conveyed by a relatively greater disproportionate size, such as a disproportionately large size of the image of the basketball 252 relative to the image of other objects 250 and 254.

Certain objects, such as the wall 134, may span a length, where certain portions of the wall 134 are relatively more proximal to the rear of the vehicle 102 than other portions of the wall 134. Therefore, in certain embodiments, the relative size of the image 254 corresponding to a proximal portion of the wall 256 may be greater than the relative size of the image 254 corresponding to a more distal portion of the wall 258.

It should be noted that the various enhancements to portions of the image displayed on the display 176 may be combined. Therefore, prominence of the image of one object relative to another object may be conveyed with oscillation and any combinations of colors, halos, shading, brightness, and disproportionate size. As a non-limiting example, a particular enhanced image may render a proximal object with oscillation, a disproportionately large size and with a relatively large halo compared to more distal objects from the vehicle 102.

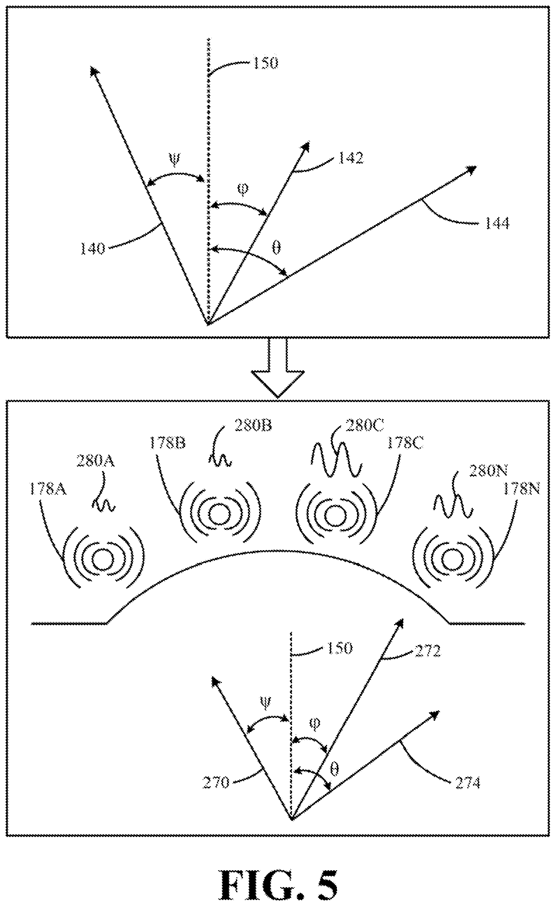

Referring now to FIG. 5, the generation of example enhanced audio signals for conveying distance and direction of proximal objects relative to the vehicle 102 is illustrated. For convenience, the vectors 140, 142, and 144 from FIGS. 1A and 1B, indicating the range to the vehicle 102 and the angles ψ, ϕ, and θ relative to the reference plane 150 of each of the objects 130, 132, and 134, respectively, are shown. The one or more speakers 178 may comprise speakers 178A, 178B, 178C, and 178N. Although four speakers 178A-N are depicted for illustrative purposes, there may be any number of speakers. In one aspect, the speakers 178A-N may be provided within the interior or cockpit of the vehicle 102. In another aspect, the speakers 178A-N may be provided within the cockpit of the vehicle 102 near the rear, such that sound generated by the speakers 178A-N may be heard by a user, such as the driver of the vehicle 102 from behind, when facing a front of the vehicle 102.

The one or more processors 168 may analyze the object vectors 140, 142, and 144 and generate spatialized sound vectors 270, 272. and 274 corresponding to objects 130, 132, and 134, respectively. In one aspect, the sound vectors 270, 272, and 274 may represent the magnitude and direction of sound. In certain embodiments, the direction of sound as represented by the sound vectors 270, 272, and 274 may appear to originate substantially from the direction of the obstruction objects 130, 132, and 134, from a predesignated position, such as the driver's seat of the vehicle. Additionally, the magnitude of the sound generated by the speakers 178A-N from a particular direction may be related to the distance of an obstruction in that direction. For example, the vector 142, corresponding to the basketball 132, may be the shortest vector due to the basketball being the most proximal of the obstruction objects 130, 132, and 134 behind the vehicle 102. The corresponding sound vector 272 may have a relatively greater magnitude compared to the other sound vectors 270 and 274, as a result of the proximity of the basketball 132 to the vehicle 102 compared to the proximity of the other objects 130 and 134. Furthermore, the angle of the sound vectors ψ, ϕ, and ϕ with reference to the reference plane 150 may be the same or substantially similar to the angles ϕ, ϕ, and θ of the objects 130, 132, and 134 relative to the reference plane 150.

The one or more processors 168 may provide acoustic signals 280A, 280B, 280C, and 280N to output sound from each of the speakers 178A-N in a manner so that the sound appears to a listener to have substantially the directionality and magnitude as depicted by the sound vectors 270, 272, and 274. To produce the desired sounds, the one or more processors 168 may provide different magnitudes of acoustic signals 280A-N to the one or more speakers 178A-N. For example, the acoustic signals 280C and 280N, provided to speakers 178C and 178N, may be of greater magnitude than the acoustic signals 280A and 280B, provided to speakers 178A and 178B, to generate a greater audio output consistent with the direction of sound vector 272, corresponding to the basketball 132.

Embodiments described herein may be implemented using hardware, software, and/or firmware, for example, to perform the methods and/or operations described herein. Certain embodiments described herein may be provided as a tangible machine-readable medium storing machine-executable instructions that, if executed by a machine, cause the machine to perform the methods and/or operations described herein. The tangible machine-readable medium may include, but is not limited to, any type of disk including floppy disks, optical disks, compact disk read-only memories (CD-ROMs), compact disk rewritables (CD-RWs), magneto-optical disks, semiconductor devices such as read-only memories (ROMs), random access memories (RAMs) such as dynamic and static RAMs, crasable programmable read-only memories (EPROMs), electrically crasable programmable read-only memories (EEPROMs), flash memories, magnetic or optical cards, or any type of tangible media suitable for storing electronic instructions. The machine may include any suitable processing or computing platform, device or system and may be implemented using any suitable combination of hardware and/or software. The instructions may include any suitable type of code and may be implemented using any suitable programming language. In other embodiments, machine-executable instructions for performing the methods and/or operations described herein may be embodied in firmware.

Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications.

The terms and expressions which have been employed herein are used as terms of description and not of limitation In the use of such terms and expressions, there is no intention of excluding any equivalents of the features shown and described (or portions thereof), and it is recognized that various modifications arc possible within the scope of the claims. Other modifications, variations, and alternatives are also possible. Accordingly, the claims are intended to cover all such equivalents.

While certain embodiments of the invention have been described in connection with what is presently considered to be the most practical and various embodiments, it is to be understood that the invention is not to be limited to the disclosed embodiments, but on the contrary, is intended to cover various modifications and equivalent arrangements included within the scope of the claims. Although specific terms are employed herein, they are used in a generic and descriptive sense only, and not for purposes of limitation.

## Claims

1. A method comprising:
receiving (184), by at least one processor associated with a vehicle, an image sensor signal and a range sensor signal;
determining, by the at least one processor, a first range to a first object and a second range to a second object based on the range sensor signal;
generating (192), by the at least one processor, an enhanced image signal corresponding to an enhanced image based in part on the range to the first object and the image sensor signal, and the range to the second object, wherein the enhanced image provides an image of the first object and the second, wherein the first object is visually enhanced relative to the second object, wherein the enhancement is based on an oscillation of the first object relative to the second object; and
providing (196), by the at least one processor, the enhanced image signal to a display device associated with the vehicle.

2. The method of claim 1, wherein the visual enhancement is a combination of an oscillation with at least one of: (i) an enhanced brightness; (ii) a different color; (iii) a different frequency of oscillation; (iv) a different magnitude of oscillation; (v) a surrounding halo; (vi) a different size of a surrounding halo; (vii) a different color of a surrounding halo; (viii) a disproportionate size; or (ix) a different level of pixel dithering.

3. The method of any of claims 1 or 2, further comprising generating, by the at least one processor, at least one audio signal corresponding to an audio output based at least in part on the at least one sensor signal and providing the at least one audio signal to at least one audio speaker.

4. The method of claim 3, wherein generating the at least one audio signal further comprising determining an angle corresponding to each of the at least one object.

5. A vehicle comprising:
an image sensor and a range sensor, each configured to provide information on at least one object;
at least one processor configured to receive the information and generate an enhanced image signal corresponding to an enhanced image based on the information, wherein the enhanced image provides an image of a first object and a second object, wherein one of the first object and the second object is visually enhanced relative to the other of the first object and the second object, wherein the enhancement is based on an oscillation of the first object relative to the second object;
a display configured to receive the enhanced image signal from the at least one processor and displaying the enhanced image.

6. The vehicle of claim 5, wherein the enhanced image provides an image of the at least one object, wherein one of the at least one object is visually enhanced relative to the other of the at least one object.

7. The vehicle of claim 6, wherein the visual enhancement is a combination of an oscillation with at least one of: (i) an enhanced brightness; (ii) a different color; (iii) a different frequency of oscillation; (iv) a different magnitude of oscillation; (v) a surrounding halo; (vi) a different size of a surrounding halo; (vii) a different color of a surrounding halo; (viii) a disproportionate size; or (ix) a different level of pixel dithering.

8. The vehicle of claim 5, wherein the at least one processor is further configured to generate at least one audio signal corresponding to an audio output based in part on the information on the at least one object.

9. The vehicle of claim 8, wherein the audio output comprises audio features corresponding to the proximity of the at least one object.

10. The vehicle of claim 9, wherein the audio output corresponding to each of the at least one speaker provides sound with the greatest magnitude from substantially the direction of a most proximate of the at least one object relative to a reference point within the vehicle.

## Patentansprüche

1. Verfahren, umfassend:
Empfangen (184) eines Bildsensorsignals und eines Entfernungssensorsignals durch mindestens einen Prozessor, der zu einem Fahrzeug gehört;
Ermitteln einer ersten Entfernung zu einem ersten Objekt und einer zweiten Entfernung zu einem zweiten Objekt basierend auf dem Entfernungssensorsignal durch den mindestens einen Prozessor;
Generieren (192) eines aufgewerteten Bildsignals, das einem aufgewerteten Bild entspricht, das teilweise auf der Entfernung zu dem ersten Objekt und dem Bildsensorsignal sowie der Entfernung zu dem zweiten Objekt entspricht, wobei das aufgewertete Bild ein Bild des ersten Objekts und des zweiten Objekts bereitstellt, wobei das erste Objekt relativ zu dem zweiten Objekt visuell aufgewertet ist, wobei die Aufwertung auf einer Oszillation des ersten Objekts relativ zu dem zweiten Objekt basiert, durch den mindestens einen Prozessor; und
Bereitstellen (196) des aufgewerteten Bildsignals an eine Anzeigevorrichtung, die zu dem Fahrzeug gehört, durch den mindestens einen Prozessor.

2. Verfahren nach Anspruch 1, wobei die visuelle Aufwertung eine Kombination einer Oszillation mit mindestens einem der folgenden ist:
(i) einer aufgewerteten Helligkeit;
(ii) einer anderen Farbe;
(iii) einer anderen Oszillationsfrequenz;
(iv) einer anderen Oszillationsstärke;
(v) einem umgebenden Halo;
(vi) einer anderen Größe eines umgebenden Halos;
(vii) einer anderen Farbe eines umgebenden Halos;
(viii) einer unverhältnismäßigen Größe; oder
(ix) einem anderen Grad an Pixel-Dithering.

3. Verfahren nach einem der Ansprüche 1 oder 2, ferner umfassend Generieren mindestens eines Audiosignals, das einer Audioausgabe entspricht, die mindestens teilweise auf dem mindestens einen Sensorsignal basiert, und Bereitstellen des mindestens einen Audiosignals an mindestens einen Audiolautsprecher, durch den mindestens einen Prozessor.

4. Verfahren nach Anspruch 3, wobei Generieren des mindestens einen Audiosignals ferner Ermitteln eines Winkels umfasst, der jedem des mindestens einen Objekts entspricht.

5. Fahrzeug, umfassend:
einen Bildsensor und einen Entfernungssensor, die jeweils konfiguriert sind, um Informationen zu mindestens einem Objekt bereitzustellen;
mindestens einen Prozessor, der konfiguriert ist, um die Informationen zu empfangen und basierend auf den Informationen ein aufgewertetes Bildsignal zu generieren, das einem aufgewerteten Bild entspricht, wobei das aufgewertete Bild ein Bild eines ersten Objekts und eines zweiten Objekts bereitstellt, wobei eines von dem ersten Objekt und dem zweiten Objekt relativ zu dem anderen von dem ersten Objekt und dem zweiten Objekt visuell aufgewertet ist, wobei die Aufwertung auf einer Oszillation des ersten Objekts relativ zu dem zweiten Objekt basiert;
eine Anzeige, die konfiguriert ist, um das aufgewertete Bildsignal von dem mindestens einen Prozessor zu empfangen und das aufgewertete Bild anzuzeigen.

6. Fahrzeug nach Anspruch 5, wobei das aufgewertete Bild ein Bild des mindestens einen Objekts bereitstellt, wobei eines von dem mindestens einen Objekt relativ zu dem anderen des mindestens einen Objekts visuell aufgewertet ist.

7. Fahrzeug nach Anspruch 6, wobei die visuelle Aufwertung eine Kombination einer Oszillation mit mindestens einem der folgenden ist:
(i) einer aufgewerteten Helligkeit;
(ii) einer anderen Farbe;
(iii) einer anderen Oszillationsfrequenz;
(iv) einer anderen Oszillationsstärke;
(v) einem umgebenden Halo;
(vi) einer anderen Größe eines umgebenden Halos;
(vii) einer anderen Farbe eines umgebenden Halos;
(viii) einer unverhältnismäßigen Größe; oder
(ix) einem anderen Grad an Pixel-Dithering.

8. Fahrzeug nach Anspruch 5, wobei der mindestens eine Prozessor ferner konfiguriert ist, um mindestens ein Audiosignal zu generieren, das einer Audioausgabe entspricht, die teilweise auf den Informationen zu dem mindestens einen Objekt basiert.

9. Fahrzeug nach Anspruch 8, wobei die Audioausgabe Audiomerkmale umfasst, die der Nähe des mindestens einen Objekts entsprechen.

10. Fahrzeug nach Anspruch 9, wobei die Audioausgabe, die jedem des mindestens einen Lautsprechers entspricht, Schall mit der größten Stärke aus im Wesentlichen der Richtung eines nächstbefindlichen des mindestens einen Objekts relativ zu einem Referenzpunkt innerhalb des Fahrzeugs bereitstellt.

## Revendications

1. Procédé consistant :
à recevoir (184), au moyen d'au moins un processeur associé à un véhicule, un signal de capteur d'image et un signal de capteur de distance ;
à déterminer, au moyen du ou des processeurs, une première distance par rapport à un premier objet et une seconde distance par rapport à un second objet en se basant sur le signal de capteur de distance ;
à générer (192), au moyen du ou des processeurs, un signal d'image améliorée correspondant à une image améliorée en se basant, au moins en partie, sur la distance par rapport au premier objet et sur le signal de capteur d'image, et sur la distance par rapport au second objet, dans lequel l'image améliorée fournit une image du premier objet et du second objet, dans lequel le premier objet est visuellement amélioré par rapport au second objet, dans lequel l'amélioration est basée sur une oscillation du premier objet par rapport au second objet ; et
à fournir (196), au moyen du ou des processeurs, le signal d'image améliorée à un dispositif d'affichage associé au véhicule.

2. Procédé selon la revendication 1, dans lequel l'amélioration visuelle est une combinaison d'une oscillation avec : (i) une meilleure luminosité ; et/ou (ii) une couleur différente ; et/ou (iii) une autre fréquence d'oscillation ; et/ou (iv) une autre amplitude d'oscillation ; et/ou (v) un halo environnant ; et/ou (vi) une taille différente d'un halo environnant ; et/ou (vii) une couleur différente d'un halo environnant ; et/ou (viii) une taille disproportionnée ; et/ou (ix) un niveau différent de juxtaposition de pixels.

3. Procédé selon l'une quelconque des revendications 1 ou 2, consistant en outre à générer, au moyen du ou des processeurs, au moins un signal audio correspondant à une sortie audio en se basant, au moins en partie, sur le ou les signaux de capteur et à fournir le ou les signaux audio à au moins un haut-parleur audio.

4. Procédé selon la revendication 3, dans lequel la génération du ou des signaux audio consiste en outre à déterminer un angle correspondant à l'objet ou à chacun des objets.

5. Véhicule comprenant :
un capteur d'image et un capteur de distance, chacun étant configuré pour fournir des informations sur au moins un objet ;
au moins un processeur configuré pour recevoir les informations et pour générer un signal d'image améliorée correspondant à une image améliorée en se basant sur les informations, dans lequel l'image améliorée fournit une image d'un premier objet et d'un second objet, dans lequel l'un du premier objet et du second objet est visuellement amélioré par rapport à l'autre du premier objet et du second objet, dans lequel l'amélioration est basée sur une oscillation du premier objet par rapport au second objet ;
un dispositif d'affichage configuré pour recevoir le signal d'image améliorée en provenance du ou des processeurs et à afficher l'image améliorée.

6. Véhicule selon la revendication 5, dans lequel l'image améliorée fournit une image du ou des objets, dans lequel l'un du ou des objets est visuellement amélioré par rapport à l'autre du ou des objets.

7. Véhicule selon la revendication 6, dans lequel l'amélioration visuelle est une combinaison d'une oscillation avec : (i) une meilleure luminosité ; et/ou (ii) une couleur différente ; et/ou (iii) une autre fréquence d'oscillation ; et/ou (iv) une autre amplitude d'oscillation ; et/ou (v) un halo environnant ; et/ou (vi) une taille différente d'un halo environnant ; et/ou (vii) une couleur différente d'un halo environnant ; et/ou (viii) une taille disproportionnée ; et/ou (ix) un niveau différent de juxtaposition de pixels.

8. Véhicule selon la revendication 5, dans lequel le ou les processeurs sont en outre configurés pour générer au moins un signal audio correspondant à une sortie audio en se basant, au moins en partie, sur les informations concernant le ou les objets.

9. Véhicule selon la revendication 8, dans lequel la sortie audio comprend des caractéristiques audio correspondant à la proximité du ou des objets.

10. Véhicule selon la revendication 9, dans lequel la sortie audio correspondant au haut-parleur ou à chacun des haut-parleurs fournit un son ayant l'amplitude la plus importante à partir sensiblement de la direction d'un objet le plus proche du ou des objets par rapport à un point de référence à l'intérieur du véhicule.
